# EUROPÄISCHE PATENTANMELDUNG

(11) **EP 2 498 069 A2**
(43) Veröffentlichungstag der Anmeldung: **12.09.2012**
(21) Anmeldenummer: 11009820.9
(22) Anmeldetag: 13.12.2011
(51) Int. Cl.: G01F 1/84

(54) **Coriolis-Massedurchflussmessgerät**

(30) Priorität: 07.03.2011 DE 102011013263
(71) Anmelder: Krohne AG, 4019 Basel (CH)
(72) Erfinder: Jukes, Edward, Northamptonshire NN 8 1 RX (GB)
(74) Vertreter: Gesthuysen, von Rohr & Eggert

(57) **Zusammenfassung**

Beschrieben und dargestellt ist ein Coriolis-Massedurchflussmessgerät (1) mit mindestens einem Messrohr (2) und mindestens einer Aktuatoranordnung (4), wobei die Aktuatoranordnung (4) mindestens einen ersten Leiter (11) mit Windungen (12) und mindestens einen Stellkörper (8) umfasst.

Ein Coriolis-Massedurchflussmessgerät; das übliche oder sogar große Kräfte zur Schwingungsanregung gewährleistet und gleichzeitig das Risiko eines Funkenüberschlags in explosionsgeschützten Umgebungen reduziert, wird realisiert, indem die Aktuatoranordnung (4) mindestens einen zweiten Leiter (13) mit Windungen (14) umfasst, dass die Windungen (14) des zweiten Leiters (13) parallel zu den Windungen (12) des ersten Leiters (11) angeordnet sind, dass der erste Leiter (11) und der zweite Leiter (13) zumindest im Bereich der Windungen (12, 14) voneinander isoliert sind, und dass der erste Leiter (11) und der zweite Leiter (13) derart angeschlossen sind, dass der erste Leiter (11) und der zweite Leiter (13) im Betriebszustand gleichsinnig mit einem Strom beaufschlagbar sind, so dass ein gemeinsames Magnetfeld entsteht.

## Beschreibung

Die Erfindung betrifft ein Coriolis-Massedurchflussmessgerät mit mindestens einem Messrohr und mindestens einer Aktuatoranordnung, wobei die Aktuatoranordnung mindestens einen ersten Leiter mit Windungen und mindestens einen Stellkörper umfasst. Ferner betrifft die Erfindung ein Verfahren zum Betrieb eines Coriolis-Massedurchflussmessgeräts mit mindestens einer Aktuatoranordnung, wobei die Aktuatoranordnung mindestens Windungen eines ersten Leiters und parallel verlaufende Windungen eines zweiten Leiters umfasst, und wobei der erste Leiter und der zweite Leiter zumindest im Bereich der Windungen voneinander isoliert sind.

Nach dem Coriolis-Prinzip arbeitende Massedurchflussmessgeräte sind seit vielen Jahren bekannt und erlauben die Bestimmung des Massedurchsatzes des durch das Messrohr strömenden Mediums mit hoher Genauigkeit. Zur Ermittlung des Massedurchsatzes wird das Messrohr mit einer Aktuatoranordnung oder auch mit mehreren Aktuatoranordnungen zu Schwingungen - insbesondere mit der Eigenfrequenz einer bestimmten Eigenform einer Schwingung - angeregt, und die resultierenden Schwingungen werden mit Sensoranordnungen erfasst und anschließend ausgewertet. Die Schwingungsanregung der Messrohre und die Erfassung der Schwingungen können auf unterschiedlichem Wege umgesetzt werden. Gemäß einer üblichen Methode sind die Aktuatoranordnung und häufig auch die Sensoranordnung derart aufgebaut, dass sie einen Stellkörper sowie eine Spule aufweisen, wobei im Falle der Aktuatoranordnung der Stellkörper durch ein Magnetfeld der entsprechend bestromten Spule in Bewegung versetzt wird, wodurch auf elektromechanischem Wege das Messrohr ausgelenkt und in Schwingung versetzt wird. Im Falle der Sensoranordnung wird der mit einem Permanentmagnet versehene Stellkörper durch die Messrohrbewegung ausgelenkt und durch die Bewegung des Magneten in der durch die Windungen des Leiters gebildeten Spule wird eine elektrische Spannung induziert. Durch Auswertung dieser elektrischen Spannung können die Bewegung des Stellkörpers und damit die Schwingungen des Messrohrs erfasst werden.

Die Auswertung der Messergebnisse erfolgt dadurch, dass eine Phasenverschiebung zwischen den von zwei versetzt an dem Messrohr angeordneten Sensoranordnungen jeweils erfassten Schwingungen ermittelt wird, wobei diese Phasenverschiebung ein Maß für den Massedurchsatz ist. Es sind Coriolis-Massedurchflussmessgeräte bekannt, die ein einziges Messrohr aufweisen, aber auch solche, die eine Mehrzahl von Messrohren oder genau zwei Messrohre aufweisen, wobei die Messrohre entweder im Wesentlichen gerade gestreckt oder gekrümmt sind; diese konstruktiven Unterschiede sind für die vorliegende Erfindung nicht von Bedeutung.

Coriolis-Massedurchflussmessgeräte sind Resonanzmesssysteme deren Messrohre sich funktionsnotwendig ständig in Bewegung befinden. Die mit den Messrohren direkt oder auch mittlbar in Verbindung stehenden Elemente sind daher Dauervibrationen ausgesetzt, dies gilt insbesondere für die Aktuatoranordnungen wie auch für die Sensoranordnungen. Die letztlich eine elektrische Spule bildenden Windungen des ersten Leiters der Aktuatoranordnung stellen einen elektrischen Energiespeicher dar. Bei einem beispielweise durch die Dauervibration verursachten Kabelbruch in oder an der Spule kann es zu einem Bruch des Leiters kommen, wobei dies aufgrund des stetigen Stromverlaufes in dem Energiespeicher Spule zu einem Funkenüberschlag führt. Bei der Verwendung von Coriolis-Massedurchflussmessgeräten in explosionsgefährdeten Umgebungen müssen daher geeignete Maßnahmen getroffen werden, um einen Funkenüberschlag im Bereich der Spule der Aktuatoranordnung des Coriolis-Massedurchflussmessgeräts zu verhindern. Neben der Reduzierung der Stromstärke, die allerdings auch mit einer Reduzierung der Magnetfeldstärke und damit der Kraft zur Schwingungsanregung einher geht, kann eine solche Maßnahme beispielsweise im Verguss der Spule bestehen, der allerdings aufwändig ist und die Kosten der Fertigung erhöht. Insbesondere bei Coriolis-Massedurchflussmessgeräten mit Messrohren mit großer Nennweite oder bei Anwendung des Coriolis-Massedurchflussmessgeräts mit Medien mit stark dämpfenden Eigenschaften, werden große Spulen mit vielen Windungen verwendet, die im Betrieb eine hohe Energie aufweisen, wodurch das Risiko eines Funkenüberschlags erhöht ist.

Ausgehend von dem vorgenannten Stand der Technik liegt der vorliegenden Erfindung die Aufgabe zugrunde, ein Coriolis-Massedurchflussmessgerät und ein Verfahren zum Betrieb eines Coriolis-Massedurchflussmessgeräts anzugeben, mit dem übliche oder sogar große Kräfte zur Schwingungsanregung bereitgestellt werden können und bei dem gleichzeitig das Risiko eines Funkenüberschlags reduziert ist.

Die vorgenannte Aufgabe wird bei einem gattungsgemäßen Coriolis-Massedurchflussmessgerät dadurch gelöst, dass die Aktuatoranordnung mindestens einen zweiten Leiter mit Windungen umfasst, dass die Windungen des zweiten Leiters parallel zu den Windungen des ersten Leiters angeordnet sind, dass der erste Leiter und der zweite Leiter zumindest im Bereich der Windungen voneinander isoliert sind, und dass der erste Leiter und der zweite Leiter derart angeschlossen sind, dass der erste Leiter und der zweite Leiter im Betriebszustand gleichsinnig mit einem Strom beaufschlagbar sind, so dass ein gemeinsames Magnetfeld entsteht. Der Vorteil dieser Anordnung besteht darin, dass so wenigstens zwei Strompfade gebildet werden und bei Versagen - Leiterbruch - nur eines Strompfades der andere Strompfad einen Funkenüberschlag verhindern kann.

Der erste Leiter und der zweite Leiter bilden folglich gemeinsam mit ihren Windungen eine Spule für die Aktuatoranordnung, mit der das Messrohr oder die Messrohre zu Schwingungen anregbar sind. Der erste Leiter weist vorzugsweise im Wesentlichen kreisförmige und spiralförmig verlaufende Windungen auf, so dass durch die Windungen ein länglicher und im Wesentlichen kreisförmiger Spulenkanal definiert wird, in den ein Stellkörper aufnehmbar ist. Die Windungen des zweiten Leiters sind parallel zu den Windungen des ersten Leiters angeordnet, wobei parallel hier nicht zwangsläufig eine stetige Parallelität der beiden Leiter erfordert, sondern lediglich bedeutet, dass die Windungen des zweiten Leiters im Wesentlichen eine ähnliche Orientierung aufweisen wie die Windungen des ersten Leiters. Somit ist mit "parallel" auch umfasst, dass in Längserstreckung der Windungen - in Längserstreckung des Spulenkanals - auf zwei Windungen des ersten Leiters lediglich eine einzige Windung des zweiten Leiters folgt oder umgekehrt. Die Windungen des ersten Leiters und die Windungen des zweiten Leiters sind entweder lediglich einschichtig ausgeführt, oder weisen einen mehrschichtigen Aufbau mit einer Vielzahl von Windungen auf, wobei sich die Anzahl der Windungen an der erforderlichen Magnetfeldstärke bzw. der erforderlichen Kraft zur Schwingungsanregung orientiert. Stets ist jedoch gewährleistet, dass der erste Leiter und der zweite Leiter zumindest im Bereich der Windungen, d. h. dort wo das gemeinsame Magnetfeld entsteht, voneinander isoliert sind.

Die Windungen des ersten Leiters und die Windungen des zweiten Leiters können dabei einerseits frei ausgeführt sein, so dass sich die Windungen durch ihre eigene Festigkeit stützen, andererseits können die Windungen des ersten Leiters und/oder die Windungen des zweiten Leiters auf einen Wickelkörper gewickelt sein, der die Windungen stützt und gegebenenfalls den ersten Leiter und/oder den zweiten Leiter führt und positioniert und/oder eine Isolierung zwischen einzelnen Windungsschichten stabilisiert. Der Wickelkörper besteht beispielsweise aus einem Kunststoff oder einer Keramik.

Die Erfindung ist unabhängig von der Anzahl der Messrohre des Coriolis-Massedurchflussmessgeräts, so dass beispielsweise ein Messrohr, zwei Messrohre, vier Messrohre oder auch mehr Messrohre umfasst sein können. Ferner hängt auch die Anzahl der Aktuator- bzw. Sensoranordnungen von den jeweiligen Einsatzbedingungen und der Anzahl der Messrohre ab, wobei beispielsweise bei einem Coriolis-Massedurchflussmessgerät mit zwei parallel verlaufenden Messrohren üblicherweise eine Aktuatoranordnung und zwei rechts und links von der Aktuatoranordnung angeordnete Sensoranordnungen umfasst sind.

Der erste Leiter und der zweite Leiter sind im Montagezustand des Coriolis-Massedurchflussmessgeräts derart angeschlossen, dass der erste Leiter und der zweite Leiter im Betriebszustand des Coriolis-Massedurchflussmessgeräts gleichsinnig mit einem Strom beaufschlagbar sind. "Gleichsinnig mit einem Strom beaufschlagbar" bedeutet dabei, dass an die einspeiseseitigen Enden des ersten Leiters und des zweiten Leiters und die ausspeiseseitigen Enden des ersten Leiters und des zweiten Leiters stets Spannungen aus einer oder mehrerer Spannungsquellen mit gleicher Orientierung angelegt werden, so dass die Stromrichtung im ersten Leiter und im zweiten Leiter stets gleich orientiert ist. Durch den Strom im ersten Leiter bzw. den Strom im zweiten Leiter entsteht im Bezug auf jeden der Leiter ein Teilmagnetfeld. Durch die parallele und gleichorientierte Anordnung des ersten Leiters und des zweiten Leiters überlagern sich das Teilmagnetfeld der Windungen des ersten Leiters und das Teilmagnetfeld der Windungen des zweiten Leiters konstruktiv, so dass ein gemeinsames Magnetfeld entsteht, das folglich stärker ist als die beiden Teilmagnetfelder des ersten Leiters und des zweiten Leiters.

Die erfindungsgemäße Ausgestaltung weist den Vorteil auf, dass durch die parallel verlaufenden Leiter mit den parallel verlaufenden und im Sinne der Erfindung damit gleichorientierten Windungen insgesamt ein großer Drahtquerschnitt realisiert wird und damit ein großer Summenstrom innerhalb der durch die Windungen des ersten und des zweiten Leiters definierte Spule erreicht wird, wobei durch den großen Summenstrom ein im Verhältnis großes Magnetfeld erzeugt werden kann, mit dem auch Messrohre mit großen Nenndurchmessern oder stark dämpfenden Medien zuverlässig zu Schwingungen angeregt werden können. Gleichzeitig wird allerdings das Risiko von Funkenüberschlag bei Materialversagen maßgeblich reduziert, da die Einzelströme in den Leitern nicht erhöht werden müssen, um die Magnetfeldstärke zu erhöhen. Versagt lediglich einer der wenigstens zwei Leiter, ist der Stromfluss nicht gänzlich unterbrochen, so dass es zu keiner Funkenbildung kommt.

Durch das Vorsehen der beiden parallel verlaufenden Leiter kann auf eine Kapselung bzw. einen Verguss der Spule verzichtet werden, wobei trotzdem ein Einsatz des Coriolis-Massedurchflussmessgeräts in explosionsgefährdeten Umgebungen möglich ist, da es bei Versagen eines der Leiter nicht zu einem Funkenschlag kommt. Ferner hat die Erfindung den Vorteil, dass kein spezielles Material für die Leiter verwendet werden muss, sondern Standardmaterialien, z. B. übliche Kupferlegierungen, auch für erhöhte Temperaturen angewendet werden können. Auch die Durchmesser der Leiter können ein übliches Maß aufweisen, so dass eine beliebige Anzahl an Windungen realisiert werden kann, wobei gleichzeitig eine hohe magnetische Kraftwirkung und ein zuverlässiger Schutz gegen Funkenüberschlag gewährleistet ist.

Zur weiteren Steigerung der Stärke des Magnetfelds und zur zusätzlichen Reduzierung der Anfälligkeit für Funkenüberschlag ist gemäß einer vorteilhaften Ausgestaltung vorgesehen, dass mindestens ein weiterer dritter Leiter mit Windungen parallel zu den Windungen des ersten Leiters und den Windungen des zweiten Leiters vorgesehen ist. Der dritte Leiter ist zumindest im Bereich der Windungen von dem ersten Leiter und von dem zweiten Leiter isoliert, Auch der dritte Leiter ist derart angeschlossen, dass er im Betriebszustand gleichsinnig wie der erste Leiter und der zweite Leiter mit einem Strom beaufschlagbar ist, so dass sich die drei Teilmagnetfelder des ersten, zweiten und dritten Leiters konstruktiv zu einem gemeinsamen Magnetfeld überlagern. Die Windungen des dritten Leiters sind dazu neben den Windungen des ersten Leiters und des zweiten Leiters angeordnet, wobei auch hier die Parallelität der Leiter nicht zwingend bedeutet, dass die Leiter vollständig parallel zueinander verlaufen, sondern es auch denkbar ist, dass die Windungen eines oder mehrerer Leiter einen anderen Durchmesser aufweisen, als die Windungen des oder der anderen Leiter, oder auch denkbar ist, dass auf jeweils zwei Windungen des ersten Leiters und des zweiten Leiters lediglich eine Windung des dritten Leiters folgt oder umgekehrt. Diese Ausgestaltung weist den Vorteil auf, dass insgesamt ein sehr großer Gesamtquerschnitt der Leiter erreicht werden kann, wobei ein großer Summenstrom vorliegt gleichzeitig jedoch das Risiko eines Funkenüberschlags bei Versagen von einem der Leiter reduziert ist.

Um ein Ausbilden der Teilmagnetfelder des ersten Leiters und des zweiten Leiters zu gewährleisten, sind der erste Leiter und der zweite Leiter zumindest im Bereich der Windungen voneinander isoliert. Gemäß einer bevorzugten Ausgestaltung ist vorgesehen, dass der erste Leiter oder der zweite Leiter eine Isolierung aufweist, alternativ dazu der erste Leiter und der zweite Leiter eine Isolierung aufweisen. In Abhängigkeit von dem Aufbau der Aktuatoranordnung kann es ausreichend sein, wenn lediglich einer der beiden Leiter eine Isolierung aufweist, so dass der erste Leiter und der zweite Leiter im Bereich der Windungen voneinander isoliert sind. Dies bietet sich insbesondere bei solchen Ausgestaltungen an, bei denen abwechselnd auf eine Windung des ersten Leiters eine Windung des zweiten Leiters erfolgt, so dass eine Isolierung von einem der beiden Leiter ausreichend ist. Zwischen einzelnen Windungsschichten, die übereinander angeordnet sind, ist vorzugsweise ein weiterer Isolator vorgesehen, der die Schichten elektrisch voneinander isoliert. Insbesondere bei hohen Stromstärken und anderen Abfolgen der Windungen ist es vorteilhaft, wenn beide Leiter, also der erste Leiter und der zweite Leiter eine Isolierung aufweisen. Durch diese Ausgestaltung ist stets eine zuverlässige Isolierung der Leiter voneinander gewährleistet.

Eine besonders vorteilhafte Überlagerung der Teilmagnetfelder des ersten Leiters und des zweiten Leiters lässt sich erzielen, wenn gemäß einer vorteilhaften Ausgestaltung die Anzahl der Windungen des ersten Leiters der Anzahl der Windungen des zweiten Leiters entspricht. Zu jeder Windung des ersten Leiters gibt es folglich eine korrespondierende Windung des zweiten Leiters, so dass sich die Teilmagnetfelder des ersten Leiters und des zweiten Leiters besonders vorteilhaft ergänzen. Alternativ zu dieser Ausgestaltung ist gemäß einer weiteren Ausgestaltung vorgesehen, dass die Anzahl der Windungen des ersten Leiters und die Anzahl der Windungen des zweiten Leiters unterschiedlich sind. Eine solche Ausgestaltung ist grundsätzlich mit vollständig identischen Leitern denkbar, hat sich allerdings als besonders vorteilhaft herausgestellt, wenn der erste Leiter und der zweite Leiter aus unterschiedlichen Materialien hergestellt sind und/oder eine unterschiedliche Geometrie aufweisen, beispielsweise der zweite Leiter einen größeren Querschnitt aufweist als der erste Leiter, Bei einer derartigen unterschiedlichen Geometrie des ersten Leiters und des zweiten Leiters sind beispielsweise von dem Leiter, der einen geringeren Querschnitt aufweist proportional mehr Windungen vorhanden als von dem Leiter, der einen größeren Querschnitt aufweist.

Der erste Leiter und der zweite Leiter sind zumindest im Bereich der Windungen voneinander isoliert und sind beispielsweise an eine gemeinsame Spannungsquelle angeschlossen oder an zwei getrennte Spannungsquellen, so dass gleiche, aber auch unterschiedliche Spannungen an den ersten Leiter bzw. den zweiten Leiter angelegt werden können.

Als ganz besonders vorteilhaft hat sich gemäß einer weiteren Ausgestaltung herausgestellt, wenn wenigstens die einspeiseseitigen Enden des ersten Leiters und des zweiten Leiters und die ausspeiseseitigen Enden des ersten Leiters und des zweiten Leiters leitend miteinander verbunden sind. Einspeiseseitige Enden und ausspeiseseitige Enden sind dabei nicht absolut zu verstehen, da sich die Richtung des Stromflusses je nach Betriebsmodus und während des Betriebs ändert. Gemäß der vorliegenden Ausgestaltung sind die einspeiseseitigen Enden des ersten Leiters und des zweiten Leiters und auch die ausspeiseseitigen Enden des ersten Leiters und des zweiten Leiters an eine gemeinsame Spannungsquelle angeschlossen, so dass insbesondere bei identischer räumlich geometrischer Ausgestaltung und Anordnung des ersten Leiters und des zweiten Leiters zwei identische Teilmagnetfelder entstehen, die sich konstruktiv überlagern. Bei dieser Variante ist aufgrund der galvanischen Kopplung des ersten Leiters und des zweiten Leiters ein besonders einfacher und sicherer Schutz gegen Funkenbildung bei Bruch nur eines der beiden - oder mehreren - Leiter gewährleistet.

Die eingangs genannte Aufgabe ist ferner mit einem gattungsgemäßen Verfahren zum Betrieb eines Coriolis-Massedurchflussmessgeräts gelöst, indem der erste Leiter und der zweite Leiter im Betriebszustand zumindest zeitweise gleichsinnig mit einem Strom beaufschlagt werden, so dass ein gemeinsames Magnetfeld entsteht. Der erste Leiter und der zweite Leiter werden dabei derart mit einer oder mit verschiedenen Spannungen beaufschlagt, so dass sich im ersten Leiter und im zweiten Leiter jeweils ein Strom ausbildet, wobei die Flussrichtung des Stroms im ersten Leiter stets identisch zur Flussrichtung des Stromes im zweiten Leiter ist, so dass die im ersten Leiter und im zweiten Leiter entstehenden Teilmagnetfelder sich konstruktiv überlagern können und ein gemeinsames Magnetfeld ausbilden. Dass der erste Leiter und der zweite Leiter "zumindest zeitweise" gleichsinnig mit einem Strom beaufschlagt werden, bedeutet, dass nicht stets beide Leiter von einem Strom durchströmt werden, sondern es auch Betriebszustände gibt, bei denen lediglich einer der Leiter zur Erzeugung eines Magnetfeldes verwendet wird. Wenn beide Leiter von einem Strom - gleicher oder unterschiedlicher Stärke - durchströmt werden, ist jedoch stets die Stromrichtung identisch, d. h. die einspeiseseitigen Enden und ausspeiseseitigen Enden des ersten Leiters und des zweiten Leiters liegen stets - unabhängig von der tatsächlichen Richtung des Stromflusses im jeweiligen Betriebszustand - an dem jeweiligen selben Ende der Spule.

Eine flexible Anpassung der sich konstruktiv überlagernden Teilmagnetfelder des ersten Leiters und des zweiten Leiters lässt sich vorteilhaft gemäß einer weiteren Ausgestaltung des Verfahrens dadurch erzielen, dass der Strom im ersten Leiter unabhängig vom Strom im zweiten Leiter geregelt wird. Der erste Leiter und der zweite Leiter werden dabei von unterschiedlichen Spannungsquellen angesteuert, so dass sich in beiden Leitern unabhängig voneinander gleiche oder unterschiedliche Stromstärken einstellen lassen. Durch eine derartige flexible Ansteuerung des ersten Leiters und des zweiten Leiters lassen sich die Eigenschaften der Aktuatoranordnung stets auch während des Betriebs des Coriolis-Massedurchflussmessgeräts an die äußeren Umstände und insbesondere an das in dem oder den Messrohren fließende Medium anpassen und die durch das Magnetfeld erzeugte Kraft zur Schwingungserzeugung nach Bedarf anpassen.

Zur Anpassung der Magnetfeldstärke der einzelnen Teilmagnetfelder und insbesondere zur Regelung des gemeinsam aus den Teilmagnetfeldern überlagerten gemeinsamen Magnetfelds ist gemäß einer weiteren Ausgestaltung des Verfahrens vorgesehen, dass im ersten Leiter und im zweiten Leiter unterschiedliche Stromstärken eingestellt werden. Der erste Leiter und der zweite Leiter sind dazu an zwei getrennte Spannungsquellen angeschlossen, so dass unterschiedliche Stromstärken in den Leitern eingestellt werden können. Die entstehenden Teilmagnetfelder unterschiedlicher Stärke überlagern sich konstruktiv zu einem gemeinsamen Magnetfeld.

In Abhängigkeit davon, welche Kraftwirkung zum Betrieb des Coriolis-Massedurchflussmessgeräts erforderlich ist und davon, ob sich die Eigenschaften des innerhalb des Messrohrs strömenden Mediums während des Betriebs des Coriolis-Massedurchflussmessgeräts verändern, hat sich gemäß einer weiteren Ausgestaltung als vorteilhaft herausgestellt, wenn der erste Leiter und der zweite Leiter zeitlich versetzt mit einem Strom beaufschlagt werden. So ist denkbar, dass nicht von Beginn des Betriebs des Coriolis-Massedurchflussmessgeräts an die volle Kraftwirkung des kumulierten gemeinsamen Magnetfelds erforderlich ist, sondern zunächst das Erzeugen eines Magnetfelds mit lediglich einem Leiter ausreichend ist, wobei anschließend, falls zusätzliche Kraftwirkung erforderlich ist, der zweite Leiter auch mit einem Strom beaufschlagt wird. Ferner ist denkbar, dass sich die Eigenschaften des Mediums während des Betriebs des Coriolis-Massedurchflussmessgeräts verändern, so dass erforderlich wird, dass der zweite Leiter zusätzlich mit einem Strom beaufschlagt wird, so dass sich die beiden Teilmagnetfelder konstruktiv überlagern und ein Gesamtmagnetfeld mit größerer Stärke entsteht oder beispielsweise ein Leiter stromfrei geschaltet werden kann. Des Weiteren ist auch vorgesehen, dass bei einer periodischen Änderung der Stromrichtung einer der Leiter geringfügig später umgeschaltet oder nachgeschaltet wird, so dass je nach Bedarf eine Dämpfung realisiert wird.

Um die Flexibilität des Coriolis-Massedurchflussmessgeräts im Bezug auf eine Veränderung der Eigenschaften des innerhalb des Messrohrs strömenden Mediums zu erhöhen, ist gemäß einer weiteren bevorzugten Ausgestaltung vorgesehen, dass die Stromstärke im ersten Leiter und die Stromstärke im zweiten Leiter in Abhängigkeit des innerhalb des Messrohrs strömenden Mediums und/oder in Abhängigkeit des Zustands des Mediums geregelt werden. Die unterschiedlichen Dämpfungseigenschaften des Coriolis-Massedurchflussmessgeräts mit verschiedenen Medien oder die unterschiedlichen Dämpfungseigenschaften des gleichen Mediums in verschiedenen Zuständen, insbesondere bei Zweiphasenströmung, wird dadurch berücksichtigt, dass die Stromstärke in den Leitern in Abhängigkeit von dem strömenden Medium oder dem Zustand des strömenden Mediums geregelt wird, so dass eine flexible Anpassung der zur Schwingungsanregung der Messrohre erforderlichen Kraft ohne Weiteres möglich ist, indem die Stromstärke in den beiden Leitern angepasst wird, so dass stets eine gleichmäßige und definierte Anregung der Messrohre oder des Messrohrs zu Schwingungen gewährleistet ist. Die Auswertung der Mediumseigenschaften und die Anpassung der Stromstärken innerhalb des ersten und des zweiten Leiters kann durch eine bei einem Coriolis-Massedurchflussmessgerät ohnehin vorgesehene Mess- und Auswerteelektronik umgesetzt werden.

Aktuatoranordnung und Sensoranordnung sind grundsätzlich bezüglich ihrer tatsächlichen Bauelemente im Wesentlichen identisch ausgestaltet, so dass grundsätzlich jede Aktuatoranordnung im Betrieb derart umgeschaltet werden kann, dass sie als Sensoranordnung verwendet werden kann. Gemäß einer weiteren Ausgestaltung hat sich deshalb als vorteilhaft herausgestellt, wenn die Aktuatoranordnung zumindest zeitweise als Sensoranordnung verwendet wird, und dass bei Verwendung der Aktuatoranordnung als Sensoranordnung lediglich die Windungen des ersten Leiters oder die Windungen des zweiten Leiters verwendet werden. Bei Verwendung der Aktuatoranordnung als Aktuatoranordnung, nämlich zum Anregen der Messrohre zu Schwingungen ist oftmals, insbesondere bei stark dämpfenden Medien, eine hohe Kraftwirkung der Aktuatoranordnung erforderlich, weshalb der Einsatz von zwei parallel verlaufenden Leitern vorteilhaft ist, deren Magnetfelder sich zu einem gemeinsamen Magnetfeld ergänzen. Zum Erfassen der Schwingungen des Messrohrs oder der Messrohre kann es allerdings ausreichend sein, wenn die Schwingungen lediglich mit einem einzigen der beiden Leiter ausgewertet werden.

Um die Zuverlässigkeit der Auswertung der Sensoranordnung weiter zu steigern, ist ferner gemäß einer letzten Ausgestaltung des Verfahrens vorgesehen, dass abwechselnd die Windungen des ersten Leiters oder die Windungen des zweiten Leiters verwendet werden. Dabei werden bei Verwendung der Aktuatoranordnung als Sensoranordnung nicht stets die Windungen lediglich eines Leiters zur Auswertung herangezogen, sondern abwechselnd entweder die Windungen des ersten Leiters oder die Windungen des zweiten Leiters. Diese Ausgestaltung des Verfahrens hat den Vorteil, dass regelmäßig zwei unabhängige Messergebnisse erhalten werden, die auch relativ zueinander überprüft und ausgewertet werden können, wodurch die Zuverlässigkeit des Coriolis-Massedurchflussmessgeräts gesteigert wird.

Ferner betrifft die Erfindung auch eine Spule mit einem ersten Leiter mit Windungen, die dadurch gekennzeichnet ist, dass mindestens ein zweiter Leiter mit Windungen umfasst ist, dass die Windungen des zweiten Leiters parallel zu den Windungen des ersten Leiters angeordnet sind, und dass der erste Leiter und der zweite Leiter zumindest im Bereich der Windungen voneinander isoliert sind. Eine solche Spule eignet sich insbesondere zum Einsatz in einem vorangehend beschriebenen Coriolis-Massedurchflussmessgerät und auch zur Durchführung des vorangehend beschriebenen Verfahrens. Sämtliche für das erfindungsgemäße Coriolis-Massedurchflussmessgerät beschriebenen Vorteile lassen sich durch Verwendung einer solchen Spule erzielen. Eine solche Spule kann die Merkmale des Kennzeichnungsteils eines der Patentansprüche 2 bis 6 aufweisen.

Gemäß einer Ausgestaltung der Spule ist vorgesehen, dass der erste Leiter und der zweite Leiter auch am einspeiseseitigen Ende und am ausspeiseseitigen Ende er Leiter jeweils voneinander isoliert sind, so dass die Spule an zwei getrennte Spannungsquellen anschließbar ist und sich der Strom im ersten Leiter getrennt vom Strom im zweiten Leiter regeln lässt.

Alternativ zu der vorangehenden Ausgestaltung ist ferner vorgesehen, dass der erste Leiter und der zweite Leiter am einspeiseseitigen Ende und am ausspeiseseitigen Ende miteinander elektrisch kontaktiert sind. Diese Ausgestaltung eignet sich insbesondere, wenn der erste Leiter und der zweite Leiter an eine gemeinsame Spannungsquelle angeschlossen werden sollen, so dass sich bei gleicher Geometrie und Anzahl der Windungen zwei identische Teilmagnetfelder ausbilden, die sich konstruktiv zu einem gemeinsamen Magnetfeld überlagern.

Im Einzelnen gibt es nun eine Vielzahl von Möglichkeiten das erfindungsgemäße Coriolis-Masserdurchflussmessgerät und das erfindungsgemäße Verfahren zum Betrieb eines Coriolis-Massedurchflussmessgeräts auszugestalten und weiterzubilden. Dazu wird verwiesen auf die den Patentansprüchen 1 und 7 nachgeordneten Patentansprüche und auf die nachfolgende Beschreibung von bevorzugten Ausführungsbeispielen in Verbindung mit der Zeichnung. In der Zeichnung zeigen:
- Fig. 1: ein Ausführungsbeispiel eines erfindungsgemäßen Coriolis-Massedurchflussmessgeräts in perspektivischer Seitenansicht,
- Fig. 2: ein Ausführungsbeispiel einer Aktuatoranordnung für ein Coriolis-Massedurchflussmessgerät in perspektivischer Seitenansicht, und
- Fig. 3: ein Ausführungsbeispiel einer Spule mit einem ersten Leiter und einem zweiten Leiter zusammen mit einem Stellkörper.

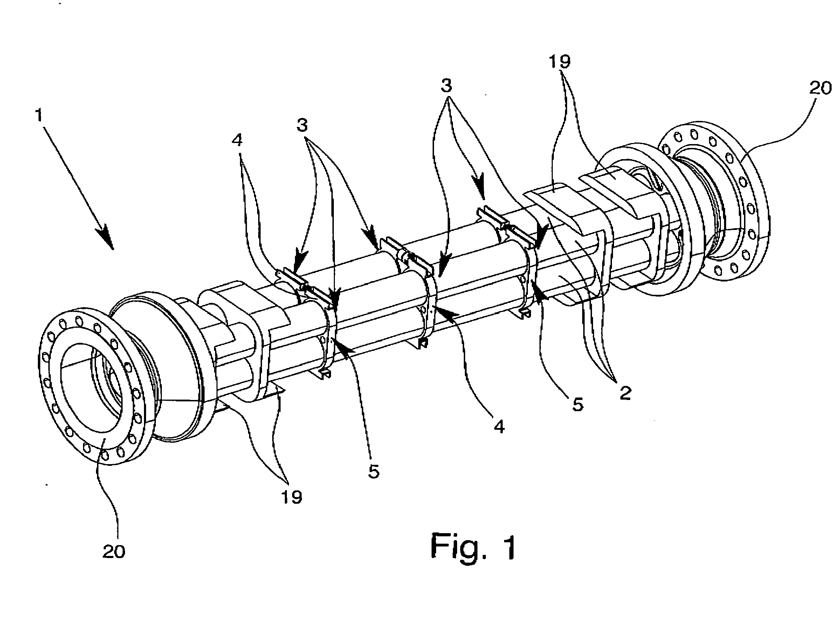

Fig. 1 zeigt ein Coriolis-Massedurchflussmessgerät 1 mit vier geraden und parallel verlaufenden Messrohren 2. Bei diesem Coriolis-Massedurchflussmessgerät 1 sind jeweils zwei Messrohre 2 mit Haltevorrichtungen 3 zu Schwingungseinheiten zusammengefasst, die im Betriebszustand gegeneinander zu Schwingungen angeregt werden. Die Schwingungsanregung der beiden Schwingungseinheiten erfolgt mit einer Aktuatoranordnung 4, die zwei gegenüberliegend angeordnete Haltevorrichtungen 3 umfasst, die die weiteren Bauteile der Aktuatoranordnung 4 tragen. Das Erfassen der Schwingungen der Messrohre 2 bzw. der Schwingungseinheiten erfolgt mit zwei Sensoranordnungen 5, die stromauf und stromab der Aktuatoranordnung 4 angeordnet sind und auch jeweils zwei gegenüberliegend angeordnete Haltevorrichtungen 3 umfassen, die die weiteren Bauteile einer Sensoranordnung 5 tragen,

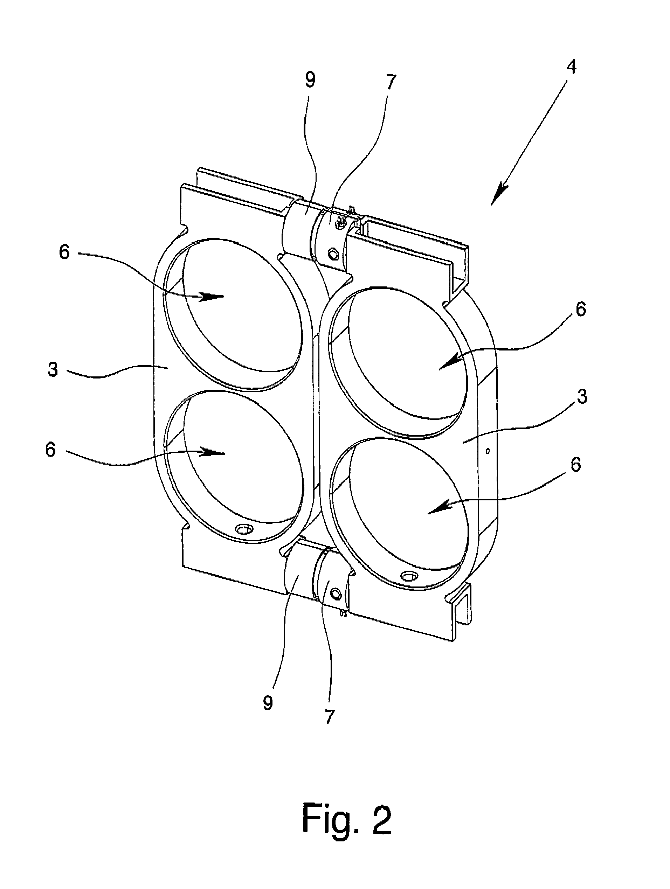

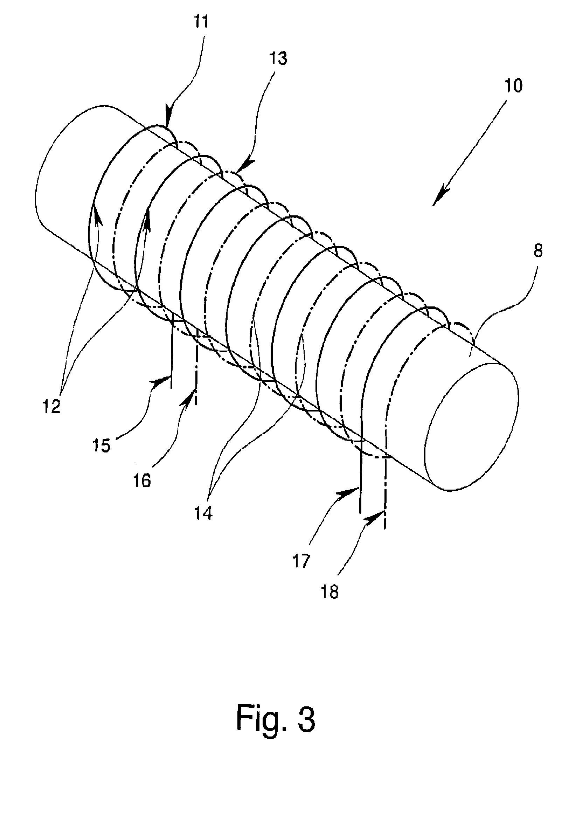

Fig. 2 zeigt ein Ausführungsbeispiel einer Aktuatoranordnung 4 mit zwei Haltevorrichtungen 3. Die Haltevorrichtungen 3 werden mit Ausnehmungen 6 auf die Messrohren 2 aufgeschoben und an den Messrohren 2 befestigt, wobei jeweils eine Haltevorrichtung 3 zwei - in Fig. 1 dargestellte - Messrohre 2 zu einer Schwingungseinheit verbindet. Zum Anregen der Schwingungen der Messrohre 2 relativ zueinander bzw. der Schwingungseinheiten relativ zueinander ist oberhalb und unterhalb der Messrohre 2 jeweils eine in einem Spulengehäuse 7 angeordnete und mit einem - in Fig. 3 dargestellten - Stellkörper 8, der in einem Mantel 9 angeordnet ist, im Betriebszustand zusammenwirkende - in Fig. 3 dargestellte - Spule 10 vorgesehen.

Fig. 3 zeigt ein schematisch dargestelltes Ausführungsbeispiel einer Spule 10 mit einem ersten Leiter 11 mit Windungen 12 und einem zweiten Leiter 13 mit Windungen 14 zusammen mit einem Stellkörper 8. Zur besseren Unterscheidung ist der erste Leiter 11 in Fig. 3 als durchgezogene Linie und der zweite Leiter 12 als strichpunktierte Linie dargestellt; der erste Leiter 11 und der zweite Leiter 13 sind bei diesem Ausführungsbeispiel jedoch geometrisch vollständig identisch und bestehen aus dem gleichen Material.

Die Windungen 12 des ersten Leiters 11 und die Windungen 14 des zweiten Leiters 13 verlaufen parallel zueinander, sind kreisrund und definieren einen Spulenkanal, innerhalb dessen der Stellkörper 8 im Betriebszustand von dem gemeinsamen Magnetfeld des ersten Leiters 11 und des zweiten Leiters 13 bewegt wird. Der erste Leiter 11 und der zweite Leiter 13 sind im Montagezustand des Coriolis-Massedurchflussmessgeräts 1 derart angeschlossen, dass das an das einspeiseseitige Ende 15 des ersten Leiters 11 und das einspeiseseitige Ende 16 des zweiten Leiters 13 bzw. an das ausspeiseseitige Ende 17 des ersten Leiters bzw. das ausspeiseseitige Ende 18 des zweiten Leiters 13 eine Spannungsquelle derart angeschlossen wird, dass der erste Leiter 11 vom einspeiseseitigen Ende 15 in Richtung des ausspeiseseitigen Endes 17 und der zweite Leiter 13 vom einspeiseseitigen Ende 16 zum ausspeiseseitigen Ende 18 - also der erste Leiter 11 und der zweite Leiter 13 gleichsinnig - von einem Strom durchflossen werden, wobei im Bereich der Windungen 12 des ersten Leiters 11 und dem Bereich der Windungen 14 des zweiten Leiters 13 jeweils ein Teilmagnetfeld entsteht und sich die beiden Teilmagnetfelder des ersten Leiters 11 und des zweiten Leiters 13 konstruktiv zu einem gemeinsamen Magnetfeld überlagern, das stärker ist als die beiden Teilmagnetfelder. Durch die Wirkung des Magnetfelds wird der Stellkörper 8 im Spulenkanal der Spule 10 bewegt, wodurch eine Relativbewegung der Messrohre zueinander hervorgerufen wird, da die Spule 10 - gemäß Fig. 2 - an der einen Haltervorrichtung 3 und der Stellkörper 8 an der jeweils gegenüberliegenden Haltevorrichtung 3 gelagert ist.

Die Festlegung des einspeiseseitigen Endes 15 des ersten Leiters 11 bzw. des einspeiseseitigen Endes 16 des zweiten Leiters 13 bzw. das ausspeiseseitige Ende 17 des ersten Leiters 11 und das ausspeiseseitige Ende 18 des zweiten Leiters 13 sind nicht absolut zu betrachten, da während des Betriebs des Coriolis-Massedurchflussmessgeräts 1 die Richtung des Stromflusses periodisch gewechselt wird, um eine Schwingung der Messrohre 2 relativ zueinander hervorzurufen.

Das Ausführungsbeispiel eines Coriolis-Massedurchflussmessgeräts 1 gemäß Fig. 1 umfasst ferner einlaufseitig und auslaufseitig jeweils zwei Knotenplatten 19, die alle vier Messrohre 2 miteinander verbinden und ein Auskoppeln der Schwingungen der Messrohre 2 auf das das Coriolis-Massedurchflussmessgerät 1 umgebende - nicht dargestellte -Rohsleitungssystem verhindern und umgekehrt auch ein Einkoppeln von von dem Rohrleitungssystem ausgehenden Schwingungen auf das Coriolis-Massedurchflussmessgerät 1 unterbinden. Des Weiteren sind einlaufseitig und auslaufseitig Flanschvorrichtungen 20 vorgesehen, die zum einen als Sammler dienen und auch zur Befestigung des Coriolis-Massedurchflussmessgeräts 1 an dem Rohrleitungssystem vorgesehen sind.

## Patentansprüche

1. Coriolis-Massedurchflussmessgerät (1) mit mindestens einem Messrohr (2) und mindestens einer Aktuatoranordnung (4), wobei die Aktuatorarnordnung (4) mindestens einen ersten Leiter (11) mit Windungen (12) und mindestens einen Stellkörper (8) umfasst,
**dadurch gekennzeichnet,**
**dass** die Aktuatoranordnung (4) mindestens einen zweiten Leiter (13) mit Windungen (14) umfasst, dass die Windungen (14) des zweiten Leiters (13) parallel zu den Windungen (12) des ersten Leiters (11) angeordnet sind, dass der erste Leiter (11) und der zweite Leiter (13) zumindest im Bereich der Windungen (12, 14) voneinander isoliert sind, und dass der erste Leiter (11) und der zweite Leiter (13) derart angeschlossen sind, dass der erste Leiter (11) und der zweite Leiter (13) im Betriebszustand gleichsinnig mit einem Strom beaufschlagbar sind, so dass ein gemeinsames Magnetfeld entsteht.

2. Coriolis-Massedurchflussmessgerät (1) nach Anspruch 1, **dadurch gekennzeichnet, dass** ein mindestens ein dritter Leiter mit Windungen parallel zu den Windungen (12) des ersten Leiters (11) und den Windungen (14) des zweiten Leiters (13) vorgesehen ist.

3. Coriolis-Massedurchflussmessgerät (1) nach Anspruch 1 oder 2, **dadurch gekennzeichnet, dass** der erste Leiter (11) oder der zweite Leiter (13) eine Isolierung aufweist, alternativ dazu der erste Leiter (11) und der zweite Leiter (13) eine Isolierung aufweisen.

4. Coriolis-Massedurchflussmessgerät (1) nach einem der Ansprüche 1 bis 3, **dadurch gekennzeichnet, dass** die Anzahl der Windungen (12) des ersten Leiters (11) der Anzahl der Windungen (14) des zweiten Leiters (13) entspricht.

5. Coriolis-Massedurchflussmessgerät (1) nach einem der Ansprüche 1 bis 3, **dadurch gekennzeichnet, dass** die Anzahl der Windungen (12) des ersten Leiters (11) und die Anzahl der Windungen (14) des zweiten Leiters (13) unterschiedlich sind.

6. Coriolis-Massedurchflussmessgerät (1) nach einem der Ansprüche 1 bis 5, **dadurch gekennzeichnet, dass** wenigstens die einspeiseseitigen Enden (15, 16) des ersten Leiters (11) und des zweiten Leiters (13) und die ausspeiseseitigen Enden (17, 18) des ersten Leiters (11) und des zweiten Leiters (13) leitend miteinander verbunden sind.

7. Verfahren zum Betrieb eines Coriolis-Massedurchflussmessgeräts (1) mit mindestens einer Aktuatoranordnung (4), wobei die Aktuatoranordnung (4) mindestens Windungen (12) eines ersten Leiters (11) und parallel verlaufende Windungen (14) eines zweiten Leiters (13) umfasst, und wobei der erste Leiter (11) und der zweite Leiter (13) zumindest im Bereich der Windungen (12, 14) voneinander isoliert sind, insbesondere nach einem der Ansprüche 1 bis 6,
**dadurch gekennzeichnet,**
**dass** der erste Leiter (11) und der zweite Leiter (13) im Betriebszustand zumindest zeitweise gleichsinnig mit einem Strom beaufschlagt werden, so dass ein gemeinsames Magnetfeld entsteht.

8. Verfahren zum Betrieb eines Coriolis-Massedurchflussmessgeräts (1) nach Anspruch 7, **dadurch gekennzeichnet, dass** der Strom im ersten Leiter (11) unabhängig vom Strom im zweiten Leiter (13) geregelt wird.

9. Verfahren zum Betrieb eines Coriolis-Massedurchflussmessgeräts (1) nach Anspruch 7, **dadurch gekennzeichnet, dass** im ersten Leiter (11) und im zweiten Leiter (13) unterschiedliche Stromstärken eingestellt werden.

10. Verfahren zum Betrieb eines Coriolis-Massedurchflussmessgeräts (1) nach einem der Ansprüche 7 bis 9, **dadurch gekennzeichnet, dass** der erste Leiter (11) und der zweite Leiter (13) zeitlich versetzt mit einem Strom beaufschlagt werden.

11. Verfahren zum Betrieb eines Coriolis-Massedurchflussmessgeräts (1) nach einem der Ansprüche 7 bis 10, **dadurch gekennzeichnet, dass** die Stromstärke im ersten Leiter (11) und die Stromstärke im zweiten Leiter (13) in Abhängigkeit des innerhalb des Messrohrs (2) strömenden Mediums und/oder in Abhängigkeit des Zustands des Mediums geregelt werden.

12. Verfahren zum Betrieb eines Coriolis-Massedurchflussmessgeräts (1) nach einem der Ansprüche 7 bis 11, **dadurch gekennzeichnet, dass** die Aktuatoranordnung (4) zumindest zeitweise als Sensoranordnung (5) verwendet wird, und dass bei Verwendung der Aktuatoranordnung (4) als Sensoranordnung (5) lediglich die Windungen (12) des ersten Leiters (11) oder die Windungen (14) des zweiten Leiters (13) verwendet werden.

13. Verfahren zum Betrieb eines Coriolis-Massedurchflussmessgeräts (1) nach Anspruch 12, **dadurch gekennzeichnet, dass** abwechselnd die Windungen (12) des ersten Leiters (11) oder die Windungen (14) des zweiten Leiters (13) verwendet werden.

14. Spule (10), insbesondere für ein Coriolis-Massedurchflussmessgerät (1) nach einem der Ansprüche 1 bis 7, mit einem ersten Leiter (11) mit Windungen (12),
**dadurch gekennzeichnet,**
**dass** mindestens ein zweiter Leiter (13) mit Windungen (14) umfasst ist, dass die Windungen (14) des zweiten Leiters (13) parallel zu den Windungen (12) des ersten Leiters (11) angeordnet sind, und dass der erste Leiter (11) und der zweite Leiter (13) zumindest im Bereich der Windungen (12, 14) voneinander isoliert sind.

15. Spule (10) nach Anspruch 14, **dadurch gekennzeichnet, dass** der erste Leiter (11) und der zweite Leiter (13) an den einspeiseseitigen Enden (15, 16) und an den ausspeiseseitigen Enden (17, 18) jeweils voneinander isoliert sind.

16. Spule nach Anspruch 14, **dadurch gekennzeichnet, dass** der erste Leiter (11) und der zweite Leiter (13) an den einspeiseseitigen Enden (15, 16) und an den ausspeiseseitigen Enden (17, 18) elektrisch miteinander kontaktiert sind.
